# EUROPÄISCHE PATENTSCHRIFT

(11) **EP 1 995 024 B1**
(45) Veröffentlichungstag und Bekanntmachung des Hinweises auf die Patenterteilung: **24.02.2010**
(21) Anmeldenummer: 08008795.0
(22) Anmeldetag: 10.05.2008
(51) Int. Cl.: B25F 5/02, A01D 34/90, A01G 3/06, F16B 5/02, F16B 21/02, F16B 37/00

(54) **Handgeführtes Arbeitsgerät**
Manually operated work device
Appareil de travail manuel

(30) Priorität: 24.05.2007 DE 102007024169
(43) Veröffentlichungstag der Anmeldung: 26.11.2008
(73) Patentinhaber: Andreas Stihl AG & Co. KG, 71336 Waiblingen (DE)
(72) Erfinder: Mang, Harald, 71364 Winnenden (DE); Hoche, Florian, 71672 Marbach (DE); Pawlowski, Jan, 71332 Waiblingen (DE); Saak, Marcus, 67229 Gerolsheim (DE); Scheuer, Jörg-Erwin, 76227 Karlsruhe (DE)
(74) Vertreter: Wasmuth, Rolf

(56) Entgegenhaltungen:
- EP-A- 1 627 562
- DE-A- 3 438 478
- US-A- 3 537 336
- US-A- 4 175 298
- US-A- 4 614 452

## Beschreibung

Die Erfindung betrifft ein handgeführtes Arbeitsgerät der im Oberbegriff des Anspruchs 1 angegebenen Gattung.

Bei handgeführten Arbeitsgeräten wie beispielsweise Freischneidern oder dgl. ist es bekannt, den Mählenker, der zum Führen des Arbeitsgeräts dient, verstellbar anzuordnen, so dass die Griffposition an die Größe des Bedieners angepasst werden kann. Es ist auch bekannt, eine Transportstellung für den Mählenker vorzusehen, in der der Mählenker etwa parallel zum Führungsrohr liegt. Bekannte Fixiereinrichtungen zur Fixierung des Mählenkers sehen Klemmschalen vor, zwischen denen der Mählenker gehalten ist. Zur Fixierung dient eine Knebelschraube, die die obere Klemmschale durchragt und die in der unteren Klemmschale eingeschraubt ist. Die Knebelschraube liegt an der oberen Klemmschale auf, so dass die beiden Klemmschalen über die Knebelschraube aufeinander zu bewegt werden können, um so den Mählenker zu klemmen. Um den Mählenker in seine Transportstellung zu stellen, muss die Knebelschraube vergleichsweise weit geöffnet werden. Auch zur Verstellung der Position der Griffe sind mehrere Umdrehungen der Knebelschraube notwendig. Dadurch ist die Bedienung der Fixiereinrichtung zeitaufwendig.

Die DE 34 38 478 A1 zeigt einen Zusatzhandgriff für handbediente Maschinen, der eine Aufnahme für das Gehäuse der Maschine aufweist. Die Aufnahme kann über ein Doppelgewinde, das mit einem Handgriff verbunden ist, verstellt werden.

Die US 4,614,452 zeigt eine Verstelleinrichtung zwischen zwei Armen, die einander zugewandte radial ausgerichtete Rasten aufweisen. Zwischen den beiden Armen wirkt im Bereich der Rasten eine Druckfeder 3, die die beiden Arme auseinanderdrückt. Zum Betätigen ist ein Hebel vorgesehen, der von einer Feder in seiner Position gehalten wird.

Der Erfindung liegt die Aufgabe zugrunde, ein handgeführtes Arbeitsgerät der gattungsgemäßen Art zu schaffen, dessen Fixiereinrichtung schnell und einfach bedienbar ist.

Diese Aufgabe wird durch ein handgeführtes Arbeitsgerät mit den Merkmalen des Anspruchs 1 gelöst.

Dadurch, dass die Betätigungseinrichtung sowohl mit einem Rechtsgewinde als auch mit einem Linksgewinde in Wirkverbindung steht, ist der Betätigungsweg der Betätigungseinrichtung stark vergrößert. Dadurch, dass die Betätigungseinrichtung sowohl mit dem Linksgewinde als auch mit dem Rechtsgewinde in Wirkverbindung steht, ist keine Anlage der Betätigungseinrichtung an der Fixiereinrichtung mehr notwendig. Zwar erhöhen sich die Reibkräfte aufgrund des zweiten Gewindes, aber dadurch, dass keine Anlage der Betätigungseinrichtung mehr gegeben ist, ergibt sich keine nennenswert erhöhte Betätigungskraft des Gesamtsystems. Dadurch kann die Position des Bauteils einfach, schnell und mit geringem Kraftaufwand verändert werden.

Das verstellbar angeordnete Bauteil ist in einer Aufnahme gehalten, deren Größe vorteilhafterweise über zwei zueinander bewegliche Abschnitte veränderbar ist. Insbesondere ist das erste Gewinde in ein erstes Bauteil eingeschraubt, das auf den ersten beweglichen Abschnitt wirkt und das zweite Gewinde in ein zweites Bauteil, das auf den zweiten beweglichen Abschnitt wirkt. Dadurch, dass jeweils ein Gewinde auf einen der Abschnitte wirkt, werden die beiden Abschnitte bei Betätigung der Betätigungseinrichtung schnell aufeinander zu oder voneinander weg bewegt. Dadurch lässt sich ein schnelles Lösen oder Fixieren des Bauteils erreichen.

Das verstellbar angeordnete Bauteil ist in einer Halterung angeordnet, die insbesondere zwei Aufnahmeschalen umfasst. Es ist vorgesehen, dass die Betätigungseinrichtung gegenüber den beiden Aufnahmeschalen um eine Drehachse drehbar ist, die etwa in Bewegungsrichtung der beiden beweglichen Abschnitte zueinander liegt. Dadurch ergibt sich ein einfacher Aufbau. Die Betätigungseinrichtung kann direkt in Einschraubrichtung auf die beweglichen Abschnitte wirken.

Vorteilhaft sind beide Gewinde an der Betätigungseinrichtung ausgebildet. Insbesondere ist die Aufnahme von den beiden Aufnahmeschalen gebildet, wobei die beiden Aufnahmeschalen zueinander beweglich sind. Dies ergibt einen einfachen Aufbau. Zusätzliche Bauteile zur Ausbildung der Aufnahme werden nicht benötigt. Vorteilhaft ist das erste Gewinde in die erste Aufnahmeschale eingeschraubt. Das zweite Gewinde ist insbesondere in ein Zugelement eingeschraubt, das auf die zweite Aufnahmeschale wirkt und dessen Drehlage um die Drehachse der Betätigungseinrichtung vorteilhaft gesichert ist. Eine einfache Gestaltung ergibt sich, wenn das Zugelement in einem Trägerbauteil gehalten ist, das auf die zweite Aufnahmeschale wirkt. Dadurch kann über die Fixiereinrichtung sowohl die relative Position der beiden Aufnahmeschalen zueinander als auch die Position der Aufnahmeschalen zu dem Trägerbauteil eingestellt und fixiert bzw. gelöst werden. Vorteilhaft umfasst das Zugelement einen Gewindebolzen und einen Haltebolzen, wobei der Gewindebolzen an der Betätigungseinrichtung eingeschraubt ist und wobei der Haltebolzen an dem Trägerbauteil gehalten ist. Der Gewindebolzen und der Haltebolzen sind insbesondere über einen an dem einen Bolzen angeordneten Kugelkopf miteinander verbunden, wobei der Kugelkopf in eine Kugelkopfaufnahme des anderen Bolzens ragt. Insbesondere, wenn eine der Aufnahmeschalen schwenkbar an der anderen Aufnahmeschale gehalten ist, kann durch die zweiteilige Ausbildung des Zugelements ein einfaches Öffnen der Aufnahme erreicht werden. Durch den Kugelkopf und die Kugelkopfaufnahme ist auch das Schließen der Aufnahme vereinfacht.

Es kann jedoch auch vorgesehen sein, dass die Aufnahme von einer Spannschelle gebildet ist. Die Spannschelle kann insbesondere aus einem anderen Material als die Aufnahmeschalen bestehen, insbesondere aus Metall. Dadurch ergibt sich eine hohe Haltekraft bei geringem Verschleiß. Gleichzeitig können die beiden Aufnahmeschalen fest miteinander verbunden werden, so dass sich ein weitgehend geschlossenes Äußeres der Halterung für das Bauteil ergibt. Ein Spalt zwischen den Aufnahmeschalen ist vermieden.

Vorteilhaft ist das erste Gewinde in ein Druckelement eingeschraubt, das auf einen ersten Schenkel der Spannschelle wirkt. Das zweite Gewinde ist vorteilhaft in ein Trägerbauteil eingeschraubt, auf dem sich ein zweiter Schenkel der Spannschelle abstützt. Über die Fixiereinrichtung kann damit sowohl die Position der beiden Aufnahmeschalen zueinander als auch die Position der zweiten Aufnahmeschale zu dem Trägerbauteil gelöst oder fixiert werden. Die Halterung ist an einem Trägerbauteil des Arbeitsgeräts in mindestens zwei Positionen festlegbar. Insbesondere bei der Ausführung des Arbeitsgeräts als Freischneider kann so eine Arbeitsstellung und eine Transportstellung des Mählenkers erreicht werden. Die Halterung kann jedoch auch für ein anderes Bauteil eingesetzt werden. Um auf einfache Weise vorbestimmte Positionen festzulegen, sind Mittel zur formschlüssigen Sicherung von mindestens einer Position der Halterung an dem Trägerbauteil vorgesehen. Die Mittel zur formschlüssigen Sicherung können dabei beispielsweise eine Transportstellung und eine Betriebsstellung eines Mählenkers festlegen. Vorteilhaft fixiert die Fixiereinrichtung die Halterung an dem Trägerbauteil. Zur Fixierung des Bauteils in der Aufnahme und zur Fixierung der Halterung an dem Trägerbauteil wird damit nur eine Fixiereinrichtung benötigt. Dadurch ergibt sich ein einfacher Aufbau des Arbeitsgeräts.

Die Fixiereinrichtung umfasst eine Druckfeder, die die Aufnahme zusammendrückt. Die Druckfeder wirkt dabei zwischen dem Trägerbauteil und einer Aufnahmeschale der Halterung.

Vorteilhaft umfasst das verstellbar angeordnete Bauteil mindestens einen Griff zum Führen des Arbeitsgeräts. Das verstellbar angeordnete Bauteil ist insbesondere ein Mählenker, der an einem Führungsrohr des Arbeitsgeräts angeordnet ist. Es ist vorgesehen, dass der Mählenker in der Halterung um eine erste Drehachse verstellbar ist. Die Verstellung um die erste Drehachse erlaubt eine Einstellung der Position der Griffe des Mählenkers und eine Anpassung auf den jeweiligen Bediener. Insbesondere ist die Halterung gegenüber dem Führungsrohr um eine zweite Drehachse verstellbar. Die Verstellung der Halterung um die zweite Drehachse ermöglicht ein Verstellen des Mählenkers zwischen einer Transportstellung und einer Arbeitsstellung. Die zweite Drehachse steht dabei insbesondere senkrecht zur ersten Drehachse.

Ausführungsbeispiele der Erfindung werden im Folgenden anhand der Zeichnung erläutert. Es zeigen:
- Fig. 1: eine schematische Darstellung eines Freischneiders,
- Fig. 2: eine perspektivische Darstellung einer Halterung für den Mählenker des Freischneiders aus Fig. 1,
- Fig. 3: eine schematische Schnittdarstellung durch die Halterung aus Fig. 2,
- Fig. 4: die Halterung aus Fig. 2 in Explosions-darstellung,
- Fig. 5 bis Fig. 7: die Halterung aus Fig. 2 in Schnittdarstellung in unterschiedlichen Stellungen,
- Fig. 8: Ausführungsbeispiel einer Halterung in Schnittdarstellung.
- Fig. 9: Ein nicht erfindungsgemäßes Ausführungsbeispiel einer Halterung in Schnittdarstellung.

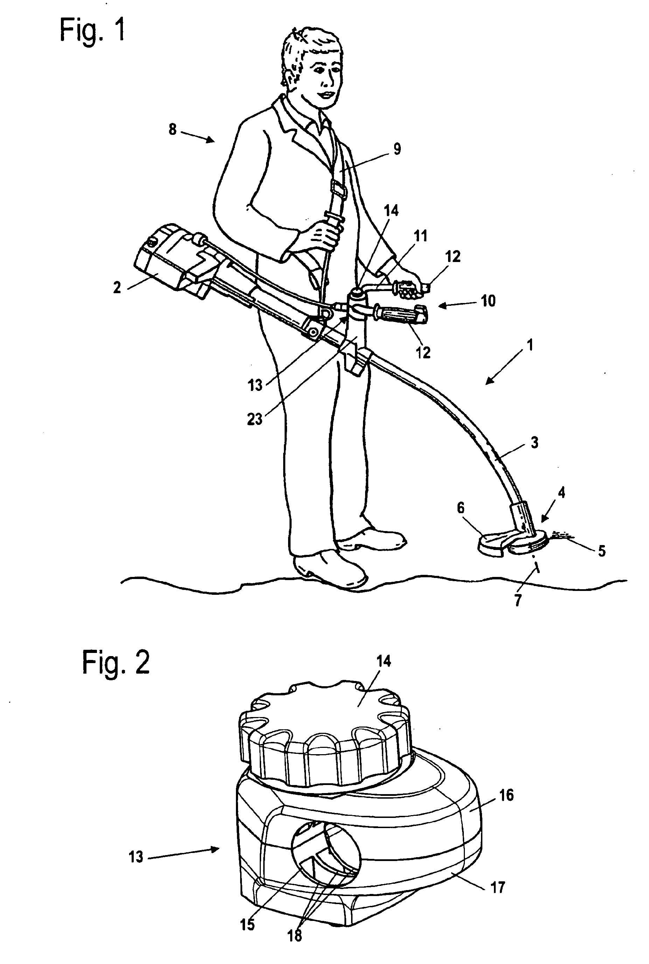

In Fig. 1 ist als Ausführungsbeispiel für ein handgeführtes, insbesondere tragbares Arbeitsgerät ein Freischneider 1 gezeigt. Der Freischneider 1 besitzt ein Motorgehäuse 2, das über ein Führungsrohr 3 mit einem Fadenmähkopf 4 verbunden ist. Im Bereich des Fadenmähkopfs 4 ist ein Schutz 6 am Führungsrohr 3 angeordnet. Der Fadenmähkopf 4 ist um eine Drehachse 7 rotierend angetrieben. Aus dem Fadenmähkopf 4 ragt ein Mähfaden 5, der sich aufgrund der Fliehkraft im Betrieb radial nach außen erstreckt. Am Führungsrohr 3 ist ein Schultergurt 9 festgelegt, mit dem ein Bediener 8 den Freischneider 1 tragen kann.

Zum Führen des Freischneiders 1 ist ein Mählenker 10 am Führungsrohr 3 festgelegt. Der Mählenker 10 umfasst ein Rohr 11, an dessen beiden Enden jeweils ein Handgriff 12 angeordnet ist. Das Rohr 11 ist etwa mittig zwischen den beiden Handgriffen 12 in einer Halterung 13 angeordnet. Die Halterung 13 ist an einem Trägerbauteil 23 gehalten, das am Führungsrohr 3 festgelegt ist. Zur Verstellung der Arbeitsposition der Handgriffe 12 besitzt die Halterung 13 ein Bedienrad 14, mit dem der Mählenker 10 in der Halterung 13 gelöst bzw. fixiert werden kann. Der Mählenker 10 ist in der Halterung 13 geklemmt gehalten. Durch Drehen des Bedienrads 14 kann die Klemmung gelöst und der Mählenker 10 in der Halterung 13 verstellt werden. Zur Fixierung des Mählenkers 10 wird das Bedienrad 14 in Gegenrichtung gedreht.

Im Ausführungsbeispiel ist als Arbeitsgerät ein Freischneider 1 gezeigt. Anstatt des Freischneiders 1 kann eine Fixiereinrichtung zur Fixierung eines verstellbar angeordneten Bauteils wie beispielsweise des Mählenkers 10 jedoch auch an anderen handgeführten Arbeitsgeräten eingesetzt werden. Auch ein Einsatz für andere Bauteile, beispielsweise für andere Griffe, kann vorteilhaft sein.

In Fig. 2 ist die Halterung 13 perspektivisch gezeigt. Die Halterung 13 umfasst eine untere Aufnahmeschale 17, die an dem Trägerbauteil 23 (Fig. 1) angeordnet ist sowie eine obere Aufnahmeschale 16, die dem Bedienerrad 14 zugewandt an der unteren Aufnahmeschale 17 anliegt. An den einander zugewandten Stirnseiten der beiden Aufnahmeschalen 16 und 17 ist jeweils eine halbkreisförmige Vertiefung 15 ausgebildet. Die beiden Vertiefungen 15 ergeben zusammen eine zylindrische Öffnung, die die Halterung 13 durchragt. Um ein geringes Gewicht des Freischneiders 1 zu erreichen, sind die Aufnahmeschalen 16 und 17 nicht massiv ausgebildet. Die Vertiefungen 15 werden deshalb nicht von einer zylindrischen Fläche, sondern von einzelnen Stegen 18 begrenzt. Die Aufnahmeschalen 16 und 17 können insbesondere aus Kunststoff sein.

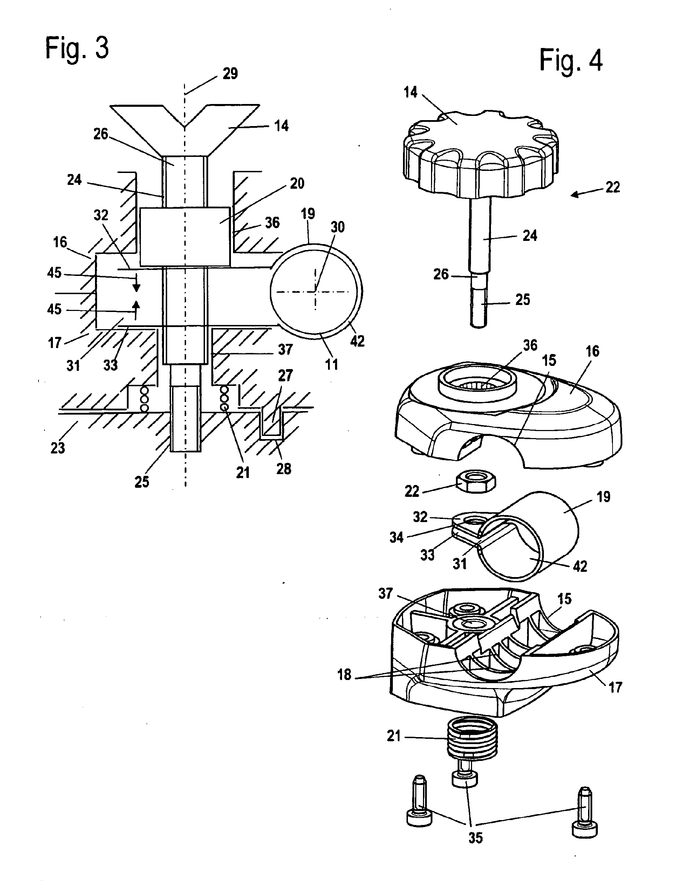

Fig. 3 zeigt das Prinzip der Fixierung der Rohrs 11. In den beiden Vertiefungen 15 ist eine Spannschelle 19 angeordnet, die das Rohr 11 umgibt. Die Spannschelle 19 besitzt zwei Schenkel 32 und 33, die seitlich von der Spannschelle 19 wegragen und zwischen denen ein Schlitz 31 gebildet ist. Durch Bewegen der beiden Schenkel 32 und 33 in der Bewegungsrichtung 45 aufeinander zu kann der Umfang der durch die Spannschelle 19 gebildeten Aufnahme 42 verkleinert und dadurch das Rohr 11 in der Aufnahme 42 geklemmt werden.

Zur Verringerung des Abstands der beiden Schenkel 32 und 33 dient eine Betätigungseinrichtung, die durch das Bedienrad 14 gebildet ist. An dem Bedienrad 14 ist ein Gewindebolzen 26 festgelegt. Der Gewindebolzen 26 durchragt die beiden Schenkel 32 und 33. Hierzu besitzen die beiden Schenkel 32 und 33 jeweils eine in Fig. 4 gezeigte Öffnung 34. Der Gewindebolzen 36 durchragt auch eine Öffnung 36 der oberen Aufnahmeschale 16 und eine Öffnung 37 der unteren Aufnahmeschale 17.

Der Gewindebolzen 26 besitzt ein erstes Gewinde 24, das in dem an das Bedienrad 14 angrenzenden Bereich des Gewindebolzens 26 ausgebildet ist, sowie ein zweites Gewinde 25 in einem dem Bedienrad 14 abgewandten Bereich. Der Durchmesser des Gewindebolzens 26 ist im Bereich des zweiten Gewindes 25 kleiner als im Bereich des ersten Gewindes 24. Die beiden Gewinde 24 und 25 sind gegenläufig. Das erste Gewinde 24 kann ein Rechtsgewinde sein. In diesem Fall ist das zweite Gewinde 25 ein Linksgewinde. Es kann jedoch auch vorgesehen sein, dass das erste Gewinde 24 ein Linksgewinde und das zweite Gewinde 25 ein Rechtsgewinde ist.

Das zweite Gewinde 25 ist in eine Gewindebohrung des Trägerbauteils 23 eingeschraubt. Das erste Gewinde 24 ist in einer Mutter 20 eingeschraubt, die benachbart zum ersten Schenkel 32 zwischen dem Bedienrad 14 und dem ersten Schenkel 32 angeordnet ist. Die Öffnung 36, in der die Mutter 20 angeordnet ist, besitzt einen vieleckigen Querschnitt, der ein Verdrehen der Mutter 20 in der Öffnung 36 verhindert.

Beim Drehen des Bedienrads 14 um die Drehachse 29 des Bedienrads 14 führen die Mutter 20 und das Trägerbauteil 23 gegenläufige Bewegungen aus. Der zweite Schenkel 33 der Spannschelle 19 stützt sich an der unteren Aufnahmeschale 17 ab, die sich wiederum auf dem Trägerbauteil 23 abstützt. Bewegen sich die Mutter 20 und das Trägerbauteil 23 aufeinander zu, so bewegen sich auch die beiden Schenkel 32 und 33 in Bewegungsrichtung 45 aufeinander zu. Dadurch wird die Spannschelle 19 zusammengedrückt und die Aufnahme 42 verkleinert sich. Das Rohr 11 wird in der Aufnahme 42 festgeklemmt. Bei Drehen des Bedienrads 14 in Gegenrichtung bewegen sich die Mutter 20 und das Trägerbauteil 23 voneinander weg. Dadurch können sich auch die beiden Schenkel 32 und 33 voneinander weg bewegen. Die Spannschelle 19 weitet sich aufgrund ihrer Eigenspannung auf und die Aufnahme 42 vergrößert sich. Dadurch kann das Rohr 11 in der Aufnahme 42 bewegt werden. Die Bewegungsrichtung 45 liegt dabei etwa in Richtung der Drehachse 29 des Bedienrads 14.

Zwischen der unteren Aufnahmeschale 17 und dem Trägerbauteil 23 ist eine Druckfeder 21 angeordnet. Die Druckfeder 21 ist so ausgelegt, dass sich beim Lösen des Bedienrads 14 zunächst die Spannschelle 19 aufweitet. Die Spannschelle 19 weitet sich auf, bis der erste Schenkel 32 an der oberen Aufnahmeschale 16 und der zweite Schenkel 33 an der unteren Aufnahmeschale 17 anliegt. Die Druckfeder 21 bleibt komprimiert, da die Kraft der Druckfeder 21 kleiner als die Kraft ist, die die Spannschelle 19 aufgrund ihrer Eigenspannung aufbringt. Bei weiterem Öffnen des Bedienrads 14 bewirkt die Druckfeder 21, dass die untere Aufnahmeschale 17 vom Trägerbauteil 23 abhebt.

Zwischen dem Trägerbauteil 23 und der unteren Aufnahmeschale 17 ist eine formschlüssige Lagesicherung gebildet. Die Lagesicherung umfasst im Ausführungsbeispiel einen Sicherungszapfen 27, der in eine Aufnahme 28 ragt. Der Sicherungszapfen 27 ist an der unteren Aufnahmeschale 17 angeformt, und die Aufnahme 28 ist im Trägerbauteil 23 ausgebildet. Vorteilhaft sind mehrere Aufnahmen 28 im Trägerbauteil 23 vorgesehen, so dass mehrere definierte Positionen der unteren Aufnahmeschale 17 am Trägerbauteil 23 festgelegt sind. Die Positionen der Halterung 13 im Trägerbauteil 23 sind vorteilhaft um 90° zueinander gedreht. Dies entspricht einer Position des Mählenkers in der in Fig. 1 gezeigten Bedienstellung sowie einer um 90° um die Drehachse 29 hierzu verdrehten Transportstellung.

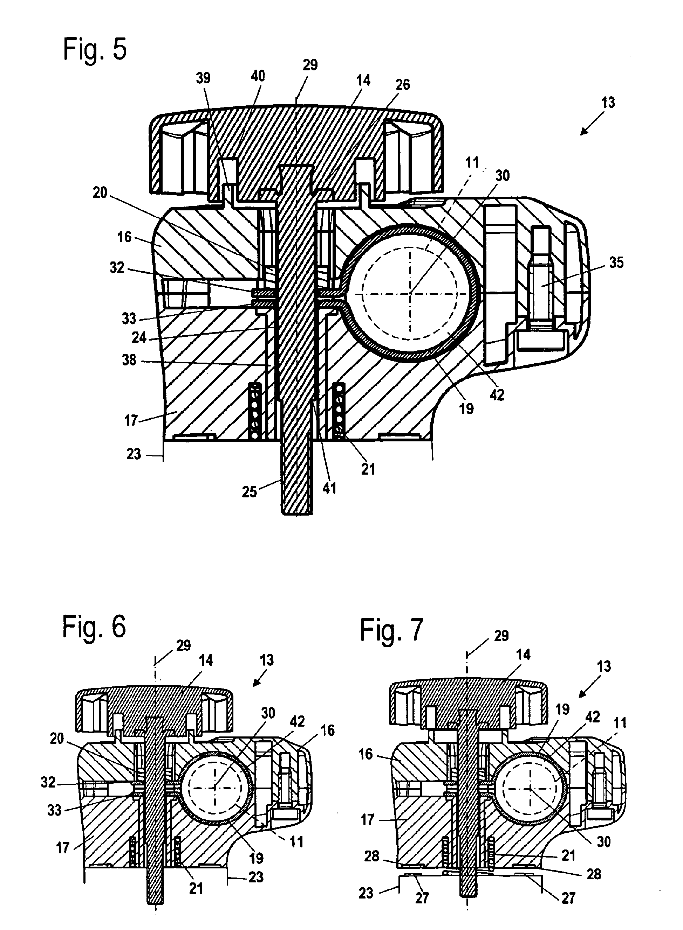

Wie Fig. 4 zeigt, bildet das Bedienrad 14 mit dem Gewindebolzen 26 eine Knebelschraube 22. Die obere Aufnahmeschale 16 und die untere Aufnahmeschale 17 sind miteinander fest verbunden. Hierzu sind drei Befestigungsschrauben 35 vorgesehen. Wie auch Fig. 5 zeigt, durchragen die Befestigungsschrauben 35 die untere Aufnahmeschale 17 und sind in der oberen Aufnahmeschale 16 eingeschraubt.

Wie Fig. 5 zeigt, sind das Bedienrad 14 und der Gewindebolzen 26 fest miteinander verbunden. Der Gewindebolzen 26 kann beispielsweise am Bedienrad 14 eingespritzt sein, wenn das Bedienrad 14 aus Kunststoff besteht. Wie Fig. 5 zeigt, besitzt der Gewindebolzen 26 zwischen den beiden Gewinden 24 und 25 einen Absatz 41. Das Bedienrad 14 besitzt an der der oberen Aufnahmeschale 16 zugewandten Unterseite eine umlaufende Vertiefung 40, in die ein hochstehender Rand 39 der oberen Aufnahmeschale 16 ragt. Der Rand 39 schützt das Innere der Halterung 13 vor Verschmutzung.

In Fig. 5 ist das Rohr 11 gestrichelt gezeigt. Das Rohr ist in der Aufnahme 42 um eine Drehachse 30 drehbar, die senkrecht zur Drehachse 29 der Knebelschraube 22 steht. In Fig. 5 ist die Halterung 13 in eingespanntem Zustand des Rohrs 11 gezeigt. Die Mutter 20 presst den ersten Schenkel 32 in Richtung auf den zweiten Schenkel 33. Die Öffnung 37 (Fig. 4) ist von einer Führungshülse 38 begrenzt. Die Führungshülse 38 besitzt einen umgebogenen Rand, an dem sich der zweite Schenkel 33 abstützt. Die Druckfeder 21 ist gespannt und vollständig in der unteren Aufnahmeschale 17 angeordnet.

Fig. 6 zeigt die Halterung 13 bei teilweise gelöstem Bedienrad 14. Wie die Fig. 6 zeigt, stützt sich der erste Schenkel 32 an der oberen Aufnahmeschale 16 ab. Die Aufnahme 42 ist erweitert, so dass das Rohr 11 in der Aufnahme 42 um die Drehachse 30 drehbar ist. Dadurch kann die Position der Handgriffe 12 eingestellt werden. Die Druckfeder 21 ist gespannt. Die untere Aufnahmeschale 17 liegt am Trägerbauteil 23 an.

In Fig. 7 ist das Bedienrad 14 noch weiter gelöst. Beim weiteren Lösen drückt die Druckfeder 21 die Halterung 13 vom Trägerbauteil 23 weg, so dass die Halterung 13 vom Trägerbauteil 23 abhebt. Die Sicherungszapfen 27 gelangen aus den Aufnahmen 28. Beim Ausführungsbeispiel nach den Figuren 5 bis 7 sind die Aufnahmen 28 an der unteren Aufnahmeschale 17 und die Sicherungszapfen 27 am Trägerbauteil 23 angeordnet. In der in Fig. 7 gezeigten Position der Halterung 13 kann die Halterung 13 um die Drehachse 29 verdreht werden. Die Sicherungszapfen 27 und die Aufnahmen 28 legen dabei definierte Positionen von Halterung 13 und Trägerbauteil 23 zueinander fest. Auch das Rohr 11 kann in der in Fig. 7 gezeigten Stellung um die Drehachse 30 gedreht werden. Die Druckfeder 21 ist so ausgelegt, dass die Kraft der Druckfeder 21 kleiner als die von der Spannschelle 19 aufgebrachte Kraft ist, so dass zuerst die Aufnahme 42 geöffnet und erst anschließend die Halterung 13 vom Trägerbauteil 23 abgehoben wird. Es kann jedoch auch eine andere Auslegung vorteilhaft sein.

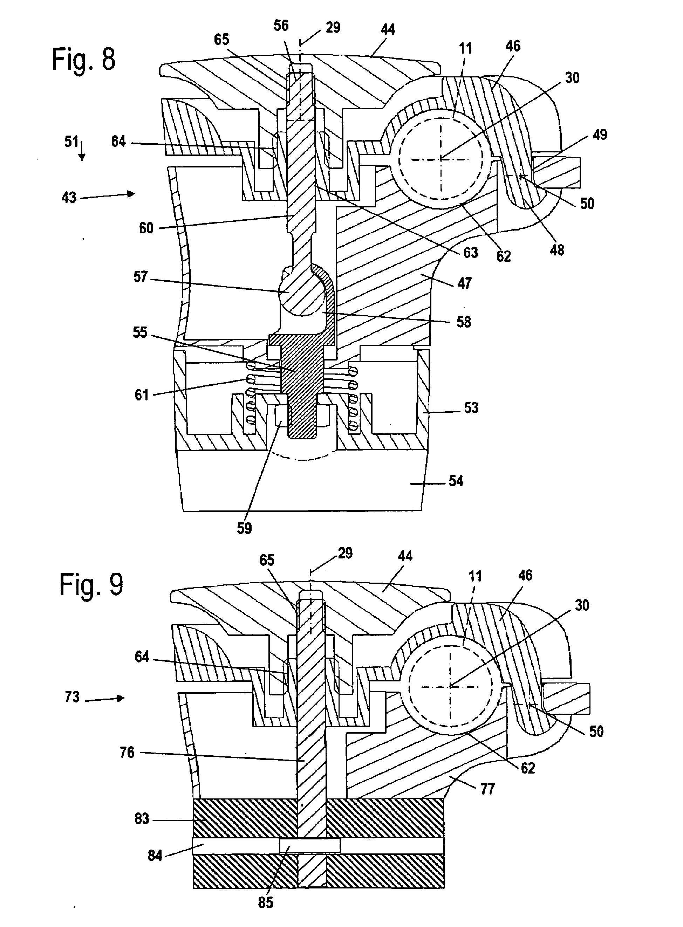

In Fig. 8 ist ein Ausführungsbeispiel einer Halterung 43 gezeigt. Die Halterung 43 besitzt eine obere Aufnahmeschale 46 und eine untere Aufnahmeschale 47. Die beiden Aufnahmeschalen 46 und 47 besitzen jeweils eine Vertiefung, wobei die beiden Vertiefungen eine Aufnahme 62 für das Rohr 11 bilden. Das Rohr 11 liegt damit zwischen den beiden Aufnahmeschalen 46 und 47. Das Rohr 11 liegt an den beiden Aufnahmeschalen 46 und 47 an. Zum Öffnen der Aufnahme 62 oder zum Festklemmen des Rohrs 11 in der Aufnahme 62 ist ein Bedienrad 44 vorgesehen. Das Bedienrad 44 besitzt ein erstes Gewinde 64 und ein zweites Gewinde 65. Die beiden Gewinde 64 und 65 sind gegenläufig zueinander ausgebildet, so dass das eine der beiden Gewinde ein Rechtsgewinde und das andere der beiden Gewinde ein Linksgewinde ist. Die beiden Gewinde 64 und 65 können dabei die gleiche Gewindesteigung besitzen, es können jedoch auch unterschiedliche Gewindesteigungen vorgesehen sein.

Das erste Gewinde 64 ist in ein Gewinde der oberen Aufnahmeschale 46 eingeschraubt. Die obere Aufnahmeschale 46 ist an der unteren Aufnahmeschale 47 schwenkbar gelagert. Hierzu ist ein Lagerabschnitt 48 an der oberen Aufnahmeschale 46 angeformt, der in eine Öffnung 49 der unteren Aufnahmeschale 47 ragt und die Öffnung 49 teilweise hintergreift. Damit ergibt sich eine Schwenkachse 50 der oberen Aufnahmeschale 46 an der unteren Aufnahmeschale 47, deren ungefähre Lage in Fig. 8 eingezeichnet ist. Die Lage der Schwenkachse 15 kann sich beim Schwenkvorgang geringfügig ändern. In dem Bereich, in dem die obere Aufnahmeschale zum Klemmen oder Lösen des Rohrs 11 gegenüber der unteren Aufnahmeschale 47 bewegt wird, bewegt sich die obere Aufnahmeschale in Bewegungsrichtung 51. Die Bewegungsrichtung 51 liegt näherungsweise parallel zur Drehachse 29 des Bedienrads 44.

Das zweite Gewinde 65 ist in einen Gewindebolzen 56 eingeschraubt. Der Gewindebolzen 56 besitzt einen Vierkantabschnitt 60, der durch eine Öffnung 63 der unteren Aufnahmeschale 47 geführt ist. Die Öffnung 63 besitzt ebenfalls einen Vierkantquerschnitt, so dass der Gewindebolzen 56 in der Öffnung 63 verdrehsicher gehalten ist. Ein Verdrehen des Bedienrads 44 um die Drehachse 29 ergibt damit ein Einschrauben oder Ausschrauben des Gewindebolzens 56 in das Bedienrad 44. An dem dem Bedienrad 44 abgewandten Ende besitzt der Gewindebolzen 56 einen Kugelkopf 57, der in eine Kugelkopfaufnahme 58 eines Haltebolzens 55 ragt. Der Haltebolzen 55 ist über eine Mutter 59 an einem Trägerbauteil 53 fixiert. An dem Trägerbauteil 53 liegt die Halterung 43 an. Zwischen dem Trägerbauteil 53 und der Halterung 43 wirkt eine Druckfeder 61, die in dem Trägerbauteil 53 angeordnet ist. Das Trägerbauteil 53 besitzt eine Aufnahme 54 für das Führungsrohr 3 des Freischneiders 1, deren obere Hälfte in Fig. 8 gezeigt ist. Der Gewindebolzen 56 und der Haltebolzen 55 bilden zusammen ein Zugbauteil, das Zugkräfte vom Bedienrad 44 auf das Trägerbauteil 53 überträgt.

Beim Drehen des Bedienrads 44 zum Lösen des Rohrs 11 in der Aufnahme 62 wird das erste Gewinde 64 in die obere Aufnahmeschale 46 eingeschraubt, so dass sich die obere Aufnahmeschale 46 zum Bedienrad 44 bewegt. Aufgrund der Gegenläufigkeit der beiden Gewinde 64 und 65 wird gleichzeitig der Gewindebolzen 56 in Richtung auf das Trägerbauteil 53 bewegt. Die Druckfeder 61 bewirkt, dass die Aufnahme 62 zunächst noch geschlossen bleibt. Allerdings ist bereits nach geringfügigem Lösen des Bedienrads 44 ein Verdrehen des Rohrs 11 in der Aufnahme 62 zur Anpassung der Position der Handgriffe 12 möglich. Bei weiterem Lösen des Bedienrads 44 drückt die Druckfeder 61 die Halterung 43 vom Trägerbauteil 53 weg, so dass die Halterung 43 um die Drehachse 29 gegenüber dem Trägerbauteil 53 verdreht werden kann. Bei gelöstem Bedienrad 44 ist es auch möglich, die obere Aufnahmeschale 46 um die Schwenkachse 50 von der unteren Aufnahmeschale 47 wegzuschwenken. Dabei wird der Kugelkopf 57 aus der Kugelkopfaufnahme 58 herausgeschwenkt. Hierzu ist die Kugelkopfaufnahme 58 nach einer Seite hin offen. In dieser geöffneten Stellung ist eine beliebige Anpassung der Position des Rohrs 11 möglich. Ob ein Verdrehen des Rohrs 11 bei nicht vollständig geöffnetem Bedienrad 44 möglich ist, ist von der Auslegung der Druckfeder 61 abhängig. Dies kann den jeweiligen Erfordernissen angepasst werden. Zum Fixieren der Position der Halterung 43 und des Rohrs 11 wird das Bedienrad 44 in Gegenrichtung gedreht. Die Aufnahmeschale 46 wird dadurch vom Bedienrad 44 weggedrückt und über den Gewindebolzen 56, den Haltebolzen 55 und das Trägerbauteil 53 wird die untere Aufnahmeschale 47 zum Bedienrad 44 gezogen. Dadurch wird das Rohr 11 in der Aufnahme 62 geklemmt.

Ein nicht erfindungsgemäßes Ausführungsbeispiel ist in Fig. 9 gezeigt. Die in Fig. 9 gezeigte Halterung 73 entspricht im Wesentlichen der in Fig. 8 gezeigten Halterung 43. Gleiche Bezugszeichen kennzeichnen dabei gleiche Bauteile. Die Halterung 73 unterscheidet sich von der Halterung 43 im Wesentlichen durch den Gewindebolzen 76, der in das Gewinde 65 des Bedienrads 44 anstatt des Gewindebolzens 56 aus Fig. 8 eingeschraubt ist. Der Gewindebolzen 76 ist fest in einem Trägerbauteil 83 gehalten. Das Trägerbauteil 83 besitzt hierzu eine Querbohrung 84, durch die ein Haltestift 85 gesteckt ist, der auch den Gewindebolzen 76 durchragt. Die Halterung 73 besitzt eine untere Aufnahmeschale 77, die an dem Trägerbauteil 83 anliegt. Beim Ausführungsbeispiel nach Fig. 9 ist keine Druckfeder vorgesehen. Beim Lösen des Bedienrads 44 wird die Klemmung des Rohrs 11 in der Aufnahme 62 gelockert und das Rohr 11 kann gedreht werden. Beim weiteren Lösen ist ein Verdrehen der Halterung 73 um die Drehachse 29 gegenüber dem Trägerbauteil 83 möglich. Ein Drehen des Bedienrads 44 in Gegenrichtung bewirkt eine Fixierung der Halterung 73 und des Rohrs 11.

Die vorgeschlagene Fixiereinrichtung kann auch bei anderen Arbeitsgeräten und zur Fixierung anderer Bauteile eingesetzt werden. Die beiden Gewinde können unterschiedliche Steigungen oder gleiche Steigungen aufweisen. Dadurch, dass die Bedienräder 14 und 44 nicht an der oberen Aufnahmeschale 16, 46 anliegen, ergeben sich geringe Betätigungskräfte bei großem axialem Betätigungsweg. Dadurch kann eine einfache und schnelle Verstellung bereits mit wenigen Umdrehungen des Bedienrads 14, 44 erreicht werden.

## Patentansprüche

1. Handgeführtes Arbeitsgerät, mit einem verstellbar an dem Arbeitsgerät angeordneten Bauteil und mit einer Fixiereinrichtung zur Fixierung des Bauteils an dem Arbeitsgerät in mindestens zwei Positionen des Bauteils,
wobei die Fixiereinrichtung ein erstes Gewinde (24, 64) und ein zweites Gewinde (25, 65) umfasst, wobei eines der Gewinde (24, 25, 64, 65) ein Rechtsgewinde und das andere der Gewinde (24, 25, 64, 65) ein Linksgewinde ist und wobei die beiden Gewinde (24, 25, 64, 65) mit einer gemeinsamen Betätigungseinrichtung in Wirkverbindung stehen, und wobei eine Halterung (13, 43, 73) vorgesehen ist, die an einem Trägerbauteil (23, 53, 83) des Arbeitsgeräts in mindestens zwei Positionen festlegbar ist, und
das verstellbar angeordnete Bauteil in der Halterung (13, 43, 73) angeordnet ist, und wobei das verstellbar angeordnete Bauteil in einer Aufnahme (42, 62) gehalten ist, **dadurch gekennzeichnet, dass** die Fixiereinrichtung eine Druckfeder (21, 61) umfasst, die die Aufnahme (42, 62) zusammendrückt, wobei die Druckfeder (21, 61) zwischen dem Trägerbauteil (23, 53) und einer Aufnahmeschale (17, 47) der Halterung (13, 43) wirkt.

2. Arbeitsgerät nach Anspruch 1,
**dadurch gekennzeichnet, dass** die Größe der Aufnahme (42, 62) über zwei zueinander bewegliche Abschnitte veränderbar ist, und dass das erste Gewinde (24, 64) in ein erstes Bauteil eingeschraubt ist, das auf den ersten beweglichen Abschnitt wirkt und das zweite Gewinde (25, 65) in ein zweites Bauteil eingeschraubt ist, das auf den zweiten beweglichen Abschnitt wirkt.

3. Arbeitsgerät nach Anspruch 1 oder 2,
**dadurch gekennzeichnet, dass** die Halterung (13, 43, 73) zwei Aufnahmeschalen (16, 17, 46, 47, 77) umfasst und dass die Betätigungseinrichtung insbesondere gegenüber den beiden Aufnahmeschalen (16, 17, 46, 47, 77) um eine Drehachse (29) drehbar ist, die etwa in Bewegungsrichtung (45, 51) der beiden beweglichen Abschnitte zueinander liegt.

4. Arbeitsgerät nach einem der Ansprüche 1 bis 3,
**dadurch gekennzeichnet, dass** beide Gewinde (24, 25, 64, 65) an der Betätigungseinrichtung ausgebildet sind, wobei die Aufnahme (62) vorteilhaft von den beiden Aufnahmeschalen (46, 47, 77) gebildet ist, wobei die beiden Aufnahmeschalen (46, 47, 77) insbesondere zueinander beweglich sind, wobei das erste Gewinde (64) vorteilhaft in die erste Aufnahmeschale (46) eingeschraubt ist.

5. Arbeitsgerät nach Anspruch 4,
**dadurch gekennzeichnet, dass** das zweite Gewinde (65) in ein Zugelement eingeschraubt ist, das auf die zweite Aufnahmeschale (47, 77) wirkt und dessen Drehlage um die Drehachse (29) der Betätigungseinrichtung gesichert ist, wobei das Zugelement vorteilhaft in einem Trägerbauteil (53, 83) gehalten ist, das auf die zweite Aufnahmeschale (47, 77) wirkt, wobei das Zugelement insbesondere einen Gewindebolzen (56) und einen Haltebolzen (55) umfasst, wobei der Gewindebolzen (56) vorteilhaft an der Betätigungseinrichtung eingeschraubt ist und wobei der Haltebolzen (55) vorteilhaft an dem Trägerbauteil (53) gehalten ist, und wobei der Gewindebolzen (56) und der Haltebolzen (55) vorteilhaft über einen an dem einen Bolzen (56) angeordneten Kugelkopf (57) miteinander verbunden sind, der in eine Kugelkopfaufnahme (58) des anderen Bolzens (55) ragt.

6. Arbeitsgerät nach einem der Ansprüche 1 bis 4,
**dadurch gekennzeichnet, dass** die Aufnahme von einer Spannschelle (19) gebildet ist, wobei das erste Gewinde (24) vorteilhaft in ein Druckelement eingeschraubt ist, das auf einen ersten Schenkel (32) der Spannschelle (19) wirkt und wobei das zweite Gewinde (25) vorteilhaft in ein Trägerbauteil (23) eingeschraubt ist, auf dem sich ein zweiter Schenkel (33) der Spannschelle (19) abstützt.

7. Arbeitsgerät nach einem der Ansprüche 3 bis 6,
**dadurch gekennzeichnet, dass** Mittel zur formschlüssigen Sicherung von mindestens einer Position der Halterung (13) an dem Trägerbauteil (23) vorgesehen sind und wobei die Fixiereinrichtung insbesondere die Halterung (13, 43, 73) an dem Trägerbauteil (23, 53, 83) fixiert.

8. Arbeitsgerät nach einem der Ansprüche 1 bis 7,
**dadurch gekennzeichnet, dass** das verstellbar angeordnete Bauteil mindestens einen Griff (12) zum Führen des Arbeitsgeräts umfasst.

9. Arbeitsgerät nach Anspruch 8,
**dadurch gekennzeichnet, dass** das verstellbar angeordnete Bauteil ein Mählenker (10) ist, der an einem Führungsrohr (3) des Arbeitsgeräts angeordnet ist, wobei der Mählenker (10) vorteilhaft in der Halterung (13, 43, 73) um eine erste Drehachse (30) verstellbar ist und die Halterung (13, 43, 73) gegenüber dem Führungsrohr (3) um eine zweite Drehachse (29) verstellbar ist, wobei die zweite Drehachse (29) insbesondere senkrecht zur ersten Drehachse (30) steht.

## Claims

1. Manually operated work device, with a component arranged at the work device in an adjustable manner and with a fixing device for fixing the component to the work device in at least two positions of the component, wherein the fixing device comprises a first thread (24, 64) and a second thread (25, 65), wherein one of the threads (24, 25, 64, 65) is a right-hand thread and the other thread (24, 26, 64, 65) is a left-hand thread, and wherein both threads (24, 25, 64, 65) are in operative connection with a common actuating device, wherein a holder (13, 43, 73) is provided, which can be fixed in at least two positions at a carrier component (23, 53, 83) of the work device, and the adjustably arranged component is arranged in the holder (13, 43, 73), and wherein the adjustably arranged component is held in a reception device (42, 62),
**characterised in that** the fixing device comprises a compression spring (21, 61), which compresses the reception device (42, 62), wherein the compression spring (21, 61) acts between the carrier component (23, 53) and a reception shell (17, 47) of the holder (13, 43).

2. Work device according to claim 1,
**characterised in that** the size of the reception device (42, 62) can be changed via two sections movable to each other, and that the first thread (24, 64) is screwed into a first component, which acts on the first movable section, and the second thread (25, 65) is screwed into a second component, which acts on the second movable section.

3. Work device according to claim 1 or 2,
**characterised in that** the holder (13, 43, 73) comprises two reception shells (16, 17, 46, 47, 77) and that the actuating device can be rotated around a rotational axis (29) especially with regard to the two reception shells (16, 17, 46, 47, 77), which is approximately in the movement direction (45, 51) of the two movable sections to one another.

4. Work device according to one of claims 1 to 3,
**characterised in that** both threads (24, 25, 64, 65) are formed at the actuating device, wherein the reception device (64) is advantageously formed by the two reception shells (46, 47, 77), wherein the two reception shells (46, 47, 77) can especially be moved with regard to one another, wherein the first thread (64) is advantageously screwed into the first reception shell (64).

5. Work device according to claim 4,
**characterised in that** the second thread (65) is screwed into a tension element which acts on the second reception shell (47, 77), and whose rotational position is secured around the rotational axis (29) of the actuating device, wherein the tension element is advantageously held in a carrier component (53, 83), which acts on the second reception shell (47, 77), wherein the tension element comprises especially a threaded bolt (56) and a retaining bolt (55), wherein the threaded bolt (56) is advantageously screwed in at the actuating device, and wherein the retaining bolt (55) is advantageously held at the carrier component (53), and wherein the threaded bolt (56) and the retaining bolt (55) are advantageously connected to one another by means of a ball coupling (57) arranged at the one bolt (55), which coupling projects into a ball coupling reception (58) of the other bolt (55).

6. Work device according to one of claims 1 to 4,
**characterised in that** the reception is formed by a clamping ring (19), wherein the first thread (24) is advantageously screwed into a pressure element, which acts on a first leg (32) of the clamping ring (19) and wherein the second thread (25) is advantageously screwed into a carrier component (23), on which is supported a second leg (33) of the clamping ring (19).

7. Work device according to one of claims 3 to 6,
**characterised in that** means are provided for the form-fit securing at least one position of the holder (13) at the carrier component (23), and wherein the fixing device particularly fixes the holder (13, 43, 73) to the carrier component (23, 53, 83).

8. Work device according to one of claims 1 to 7,
**characterised in that** the component arranged in an adjustable manner comprises at least one handle (12) for guiding the work device.

9. Work device according to claim 8,
**characterised in that** the component arranged in an adjustable manner is a mowing guide (10), which is arranged at a guide tube (3) of the work device, wherein the mowing guide (10) can advantageously be adjusted in the holder (13, 43, 73) around a first rotational axis (30), and the holder (13, 43, 73) can be adjusted with regard to the guide tube (3) around a second rotational axis (29), wherein the second rotational axis (29) is in particular vertical to the first rotational axis (30).

## Revendications

1. Appareil à main comprenant un élément disposé de manière réglable sur l'appareil et un dispositif de fixation pour fixer cet élément dans au moins deux positions à l'appareil, étant précisé que le dispositif de fixation comprend un premier filetage (24, 62) et un second filetage (25, 65), que l'un des filetages (24, 25, 64, 65) est un filetage à droite tandis que l'autre filetage (24, 25, 64, 65) est un filetage à gauche, que les deux filetages (24, 25, 64, 65) sont en relation fonctionnelle avec un dispositif d'actionnement commun, qu'il est prévu une attache (13, 43, 73) qui est apte à être bloquée au moins dans deux positions sur un élément de support (23, 53, 83) de l'appareil, que l'élément disposé de manière réglable est disposé dans l'attache (13, 43, 73) et que ledit élément disposé de manière réglable est fixé dans un logement (42, 62),
**caractérisé en ce que** le dispositif de fixation comprend un ressort de compression (21, 61) qui comprime le logement (42, 62), le ressort de compression (21, 61) agissant entre l'élément de support (23, 53) et une coque de logement (17, 47) de l'attache (13, 43).

2. Appareil selon la revendication 1,
**caractérisé en ce que** la taille du logement (42, 62) peut être modifiée par l'intermédiaire de deux parties mobiles l'une par rapport à l'autre et **en ce que** le premier filetage (24, 64) est vissé dans un premier élément qui agit sur la première partie mobile tandis que le second filetage (25, 65) est vissé dans un second élément qui agit sur la seconde partie mobile.

3. Appareil selon la revendication 1 ou 2,
**caractérisé en ce que** l'attache (13, 43, 73) comprend deux coques de logement (16, 17, 46, 47, 77) et **en ce que** le dispositif d'actionnement est apte à tourner, en particulier par rapport aux deux coques de logement (16, 17, 46, 47, 77), sur un axe de rotation (29) qui est situé à peu près dans le sens de mouvement (45, 51) des deux parties mobiles.

4. Appareil selon l'une des revendications 1 à 3,
**caractérisé en ce que** les deux filetages (24, 25, 64, 65) sont formés sur le dispositif d'actionnement, le logement (62) étant formé avantageusement par les deux coques de logement (46, 47, 77), les deux coques de logement (46, 47, 77) étant mobiles en particulier l'une par rapport à l'autre et le premier filetage (64) étant avantageusement vissé dans la première coque de logement (46).

5. Appareil selon la revendication 4,
**caractérisé en ce que** le second filetage (65) est vissé dans un élément de traction qui agit sur la seconde coque de logement (47, 77) et dont la position de rotation sur l'axe de rotation (29) du dispositif d'actionnement est bloquée, étant précisé que l'élément de traction est avantageusement fixé dans un élément de support (53, 83) qui agit sur la seconde coque de logement (47, 77), que l'élément de traction comprend en particulier une tige filetée (56) et une tige de fixation (55), que la tige filetée (56) est avantageusement vissée au dispositif d'actionnement, que la tige de fixation (55) est avantageusement fixée à l'élément de support (53) et que la tige filetée (56) et la tige de fixation (55) sont reliées avantageusement par une tête sphérique (57) qui est disposée sur une tige (56) et qui entre dans un logement pour tête sphérique (58) de l'autre tige (55).

6. Appareil selon l'une des revendications 1 à 4,
**caractérisé en ce que** le logement est formé par un collier de serrage (19), étant précisé que le premier filetage (24) est avantageusement vissé dans un élément de pression qui agit sur une première branche (32) du collier de serrage (19), et que le second filetage (25) est avantageusement vissé dans un élément de support (23) sur lequel s'appuie une seconde branche (33) du collier de serrage (19).

7. Appareil selon l'une des revendications 3 à 6,
**caractérisé en ce qu'**il est prévu des moyens pour bloquer par complémentarité de forme au moins une position de l'attache (13) sur l'élément de support (23), le dispositif de fixation fixant en particulier l'attache (13, 43, 73) à l'élément de support (23, 53, 83).

8. Appareil selon l'une des revendications 1 à 7,
**caractérisé en ce que** l'élément disposé de manière réglable comprend au moins une poignée (12) pour guider l'appareil.

9. Appareil selon la revendication 8,
**caractérisé en ce que** l'élément disposé de manière réglable est un guidon de tondeuse (10) qui est disposé sur un tube de guidage (3) de l'appareil, le guidon de tondeuse (10) étant avantageusement réglable dans l'attache (13, 43, 73) autour d'un premier axe de rotation (30) tandis que l'attache (13, 43, 73) est réglable par rapport au tube de guidage (3) sur un second axe de rotation (29), et le second axe de rotation (29) étant en particulier perpendiculaire au premier axe de rotation (30).
